# EUROPÄISCHE PATENTANMELDUNG

(11) **EP 0 682 384 A1**
(43) Veröffentlichungstag der Anmeldung: **15.11.1995**
(21) Anmeldenummer: 95106938.4
(22) Anmeldetag: 08.05.1995
(51) Int. Cl.: H01R 4/24, H04Q 1/14, H01R 31/08

(54) **Umschalteadapter für eine Telekommunikationsanschlussleiste**

(30) Priorität: 09.05.1994 DE 9407659 U
(71) Anmelder: QUANTE AKTIENGESELLSCHAFT, 42109 Wuppertal (DE)
(72) Erfinder: Tenham, Horst-Helmut, D-42107 Wuppertal (DE); Hajok, Johann, D-44795 Bochum (DE)
(74) Vertreter: Füchsle, Klaus, Dipl.-Ing.

(57) **Zusammenfassung**

Die Erfindung betrifft einen Umschalteadapter (2) für eine Telekommunikationsanschlußleiste (4), umfassend wenigstens zwei in einem isolierten Kontaktträger (6) fixierte, zueinander im wesentlichen parallel angeordnete, gleichartige Kontaktelemente (8, 36) mit mindestens einer im mittleren Bereich eines jeweiligen Kontaktelements (8, 36) befindlichen Öffnung (10) zur Durchführung mindestens einer Umschalteader (12), sowie einer in diesem mittleren Bereich angeordneten Vorrichtung (14) zum Herstellen einer abisolierfreien Kontaktverbindung (64) mit der Umschalteader (12), und einer an den freien Enden eines jeweiligen Kontaktelementes (8, 36) vorgesehenen Einrichtung (16) zum Herstellen eines Kontaktes (66) mit wenigstens einem Kontaktteil (20) oder einer Ader (18) der Anschlußleiste (4), und ein längs den Kontaktelementen (8, 36) bewegliches, isoliertes Führungsteil (26) mit im wesentlichen senkrecht zur Bewegungsrichtung verlaufenden Öffnungen (30) zum Einführen mindestens einer Umschalteader (12) zu einem Kontaktelement (8, 36) und einer Einrichtung (48, 50, 52) zum Positionieren des Umschalteadapters (2) an der Anschlußleiste (4).

## Beschreibung

Die Erfindung betrifft einen Umschalteadapter für eine Telekommunikationsanschlußleiste.

Adern von Telekommunikationskabeln werden in Abschluß- und Verteileranlagen auf Anschlußleisten aufgelegt. Diese Anschlußleisten für mehrere Aderpaare weisen bei moderneren Ausführungsformen, z.B. SID-Anschlußleisten, für die ankommenden und abgehenden Adern Schneid-Klemm-Kontakte für eine abisolierfreie Kontaktierung auf. Übernehmen diese Anschlußleisten Rangierfunktionen, so ist häufig die Forderung gestellt, für einen ungestörten Betrieb bei Umschaltarbeiten unterbrechungsfrei zu schalten. Hierzu müssen den belegten abgehenden Kontaktelementen bzw. Kontaktfedern der Anschlußleiste weitere Anschaltmöglichkeiten für eine Parallelschaltung von sogenannten Rangier- oder Umschalteadern zugeordnet werden.

Aus der DE-OS 41 15 001 ist ein Verfahren zum unterbrechungsfreien Umschalten bestehender Anschlüsse isolierter Verbindungsdrähte, insbesondere an einem Telefonnetz an einer Leiste mit Eingangs- und Ausgangseinheiten sowie eine Steckvorrichtung für ein derartiges Verfahren bekannt. Dabei weisen eine Eingangs- und Ausgangseinheit jeweils eine bewegbare Kontakteinheit auf, die Kontakt zwischen der Eingangs- und der Ausgangseinheit herstellt. Das Verfahren zeichnet sich dadurch aus, daß ein neu anzuschließender Verbindungsdraht im Bereich einer Eingangs- und/oder Ausgangseinheit mit Überlange angeordnet wird, der Verbindungsdraht mit einem Ende an eine Steckvorrichtung angeschlossen wird, die Steckvorrichtung zwischen die Kontakteinheit der Eingangseinheit und die Kontakteinheit der Ausgangseinheit eingesteckt wird, wobei die Steckvorrichtung so ausgebildet ist, daß sie in eingestecktem Zustand die Kontakteinheiten brückt, danach der bestehende Verbindungsdraht entfernt wird, dann bereichsweise der neue Verbindungsdraht im Überlängenbereich abisoliert wird, sodann der abisolierte Bereich an die Eingangs- und/oder Ausgangseinheit angeschlossen wird und nach dem Entfernen des restlichen Überlängenbereiches die Steckvorrichtung abgezogen wird.

Dieses bekannte Verfahren und die zugehörige Steckvorrichtung beinhalten jedoch erhebliche Nachteile. Das Verfahren ist nur mit einem zusätzlichen Werkzeug zur Abisolierung eines Verbindungsdrahtes durchführbar, wobei die Abisolierung zu dem in einem Mittelbereich des Verbindungsdrahtes erfolgen muß, was einen relativ aufwendigen Arbeitsvorgang darstellt. Auch der Anschluß des abisolierten Mittelbereiches des Verbindungsdrahtes an die Eingangs- und/oder Ausgangseinheit ist arbeitstechnisch nur relativ aufwendig zu realisieren. Ferner wird der restliche Überlängenbereich des neuen Anschlußdrahtes nach erfolgreichem Anschluß abgetrennt und geht somit verloren. Das bekannte Verfahren und die zugehörige bekannte Steckvorrichtung sind darüber hinaus für die Verwendung mit moderneren Anschlußleisten der SID-Technologie ungeeignet.

Der vorliegenden Erfindung liegt daher das technische Problem zugrunde, einen Umschalteadapter für SID-Anschlußleisten zu schaffen, mit dem auf einfache und effektive Weise und ohne Verwendung von aufwendigen Werkzeugen ein unterbrechungsfreier Betrieb bei Umschaltarbeiten zuverlässig gewährleistet werden kann.

Diese technische Aufgabe wird durch einen erfindungsgemäßen Umschalteadapter für eine Telekommunikationsanschlußleiste gelöst, umfassend wenigstens zwei in einem isolierten Kontaktträger fixierte, zueinander im wesentlichen parallel angeordnete, gleichartige Kontaktelemente mit mindestens einer im mittleren Bereich eines jeweiligen Kontaktelementes befindlichen Öffnung zur Durchführung mindestens einer Umschalteader sowie einer in diesem mittleren Bereich angeordneten Vorrichtung zum Herstellen einer abisolierfreien Kontaktverbindung mit der Umschalteader und einer an den freien Enden eines jeweiligen Kontaktelementes vorgesehenen Einrichtung zum Herstellen eines Kontaktes mit wenigstens einem Kontaktteil oder einer Ader der Anschlußleiste, und ein längs den Kontaktelementen bewegliches isoliertes Führungsteil mit im wesentlichen senkrecht zur Bewegungsrichtung verlaufenden Öffnungen zum Einführen mindestens einer Umschalteader zu einem Kontaktelement und einer Einrichtung zum Positionieren des Umschalteadapters an der Anschlußleiste.

Der erfindungsgemäße Umschalteadapter kann besonders vorteilhaft bei SID-Telekommunikations-Anschlußleisten eingesetzt werden. Der Umschalteadapter gewährleistet dabei einen unterbrechungsfreien und sicheren Umschaltbetrieb. Zur Herstellung einer unterbrechungsfreien Umschaltverbindung ist in der Regel kein weiteres Werkzeug erforderlich. Nach Einführen der Umschalteadern in den Umschalteadapter und nach Aufsetzen des Umschalteadapters auf eine Anschlußleiste kann mit einem einzigen Handgriff eine unterbrechungsfreie Schaltverbindung hergestellt werden. Ebenso leicht ist der Umschalteadapter wieder zu demontieren. Aufwendige Abisolierarbeiten sind nicht erforderlich. Mit dem erfindungsgemäßen Umschalteadapter wird somit der erforderliche Arbeitsaufwand auf ein Minimum reduziert.

Es hat sich als vorteilhaft erwiesen, daß die Vorrichtung zum Herstellen einer abisolierfreien Kontaktverbindung mit der Umschalteader ein Schneid-Klemm-Kontaktschlitz ist. Ferner ist es in diesem Zusammenhang günstig, daß die Öffnung zur Durchführung mindestens einer Umschalteader eine endseitige Bohrung an dem Schneid-Klemm-Kontaktschlitz ist. Mit dieser Ausgestaltungsweise kann nach Durchführen einer Umschalteader durch die genannte endseitige Bohrung mit einer kurzen Hubbewegung parallel zur Kontaktschlitzrichtung eine abisolierfreie Kontaktverbindung mit der Umschalteader hergestellt werden.

Zu Montagezwecken ist es von Vorteil, daß der Kontaktträger über eine Einrichtung zum Herstellen einer mechanischen Verbindung mit den Kontaktelementen verfügt.

Sind die Kontaktelemente als Kontaktfedern ausgebildet, so sind besonders sichere Kontaktverbindungen insbesondere mit Kontaktteilen der Anschlußleiste oder einer Umschaltader erzielbar.

Zur Herstellung der mechanischen Verbindung zwischen Kontaktträger und Kontaktelementen hat es sich ferner als günstig herausgestellt, daß die Fixierung eines jeweiligen Kontaktelementes in dem Kontaktträger über eine Klemm-, Rast-, Steck- oder Schnappverbindung oder dergleichen erfolgt.

Zur einfacheren Handhabung des Umschalteadapters ist es von Vorteil, daß das Führungsteil an den Kontaktelementen unverlierbar angebracht ist.

Des weiteren hat es sich als günstig erwiesen, daß das Führungsteil und/oder der Kontaktträger und/oder die Kontaktelemente mit einem Anschlag zur Begrenzung der Bewegung des Führungsteils längs den Kontaktelementen versehen ist. Diese Maßnahme gewährleistet die Herstellung einer sicheren und qualitativ hochwertigen Kontaktverbindung der Kontaktelemente mit einer Umschalteader und/oder einem Kontaktteil bzw. einer diesem Kontaktteil zugeordneten Ader der Anschlußleiste in einem vorbestimmten Bereich.

Eine vorteilhafte Ausgestaltungsvariante sieht vor, daß die Kontaktelemente an ihren freien Enden abgekröpft sind. Auf diese Art und Weise läßt sich nicht nur der Kontaktträger mit seinen Kontaktelementen unverlierbar am Führungsteil anbringen, sondern es lassen sich auch die Federungs- und Kontaktierungseigenschaften der Kontaktelemente manipulieren. Eine Abkröpfung der freien Enden der Kontaktelemente bzw. eine entsprechend geeignete Abwinkelung kann auch sinnvoll sein, um bestimmte schwer zugänglich Kontaktteile innerhalb der Anschlußleiste zu erreichen und sicher zu kontaktieren.

Ist die Einrichtung zum Herstellen eines Kontaktes mit wenigstens einem Kontaktteil oder einer Ader der Anschlußleiste an den jeweils freien Enden der Kontaktelemente in Form eines gabelförmigen Kontaktabschnittes oder dergleichen ausgebildet, kann insbesondere in Verbindung mit einer Längs- oder Hubbewegung des Kontaktträgers mit seinen Kontaktelementen eine sichere Kontaktverbindung zu Kontaktteilen der Ahschlußleiste hergestellt werden. In Kombination mit der Vorrichtung des Kontaktträgers zum Herstellen einer abisolierfreien Kontaktverbindung mit einer Umschalteader läßt sich mittels dieser Maßnahme bei Durchführung der oben genannten Längs- oder Hubbewegung gleichzeitig sowohl die Kontaktverbindung mit der Umschalteader als auch die Kontaktverbindung mit einem Kontaktteil der Anschlußleiste herstellen, was einen raschen unterbrechungsfreien Schaltbetrieb gewährleistet.

Wird der Kontaktabschnitt mit einer Einrichtung zur Herstellung eines Schneid-Klemm-Kontaktes versehen, können besonders mit isolierten Adern der Anschlußleiste rasch und auf einfachste Weise abisolierfreie Kontaktverbindungen hergestellt werden.

In einer weiteren vorteilhaften Ausführungsform des erfindungsgemäßen Umschalteadapters ist das Führungsteil als Gehäuse ausgebildet, in das der Kontaktträger teilweise oder vollständig einführbar ist. Dies gewährleistet eine weitere Zentrier- und Führungsfunktion und eine Vereinfachung der Bedienung.

Für manche Anwendungsfälle hat es sich als vorteilhaft erwiesen, daß das Gehäuse des Führungsteils und/oder der Kontaktträger weitere Führungs- und/oder Trennelemente besitzen. Auf diese Weise kann z.B. die Qualität der Kontaktverbindung gesteigert und eventuelle Kurzschlüsse bei einer Deformation der Kontaktelemente vermieden werden.

Der Umschalteadapter besitzt zweckmäßigerweise eine Befestigungseinrichtung zum Herstellen einer wieder lösbaren Verbindung mit der Anschlußleiste. Zur Vereinfachung sowie der Montage und Handhabung hat es sich als Vorteil herausgestellt, daß diese Befestigungseinrichtung eine Klemm-, Rast-, Steck- oder Schnappverbindung oder dergleichen ist.

Zur einfacheren Bedienung und Handhabung des erfindungsgemäßen Umschalteadapters ist dieser ferner mit Griffelementen versehen.

In Anbetracht der Gestaltungsweise moderner Anschlußleisten hat es sich als sinnvoll und vorteilhaft herausgestellt, daß der Umschalteadapter senkrecht zum Aderverlauf in der Anschlußleiste auf diese aufsteckbar ist.

Ein Ausführungsbeispiel der Erfindung mit weiteren Einzelheiten und vorteilhaften Weiterbildungen ist nachfolgend anhand der Zeichnungen beschrieben.

Es zeigen:
- Fig. 1: eine schematische Perspektivansicht einer ersten Ausführungsform eines erfindungsgemäßen Umschalteadapters,
- Fig. 2: eine schematische Schnittansicht einer zweiten Ausführungsform eines erfindungsgemäßen Umschalteadapters,
- Fig. 3: eine Schnittansicht entlang der Linie A-A in der Fig. 2 in einem Zustand vor Herstellung einer abisolierfreien Kontaktverbindung mit einer Umschalteader,
- Fig. 4: eine schematische Schnittansicht entlang der Linie A-A in Fig. 2 in einem Zustand nach Herstellung einer abisolierfreien Verbindung mit der Umschalteader,
- Fig. 5: eine schematische Schnittansicht eines Umschalteadapters gemäß der zweiten Ausführungsform, der auf eine Telekommunikation-Anschlußleiste aufgesetzt ist, und
- Fig. 6: eine perspektivische Darstellung, teilweise in Schnittansicht, des auf die Anschlußleiste aufgesetzten erfindungsgemäßen Umschalteadapters gemäß der zweiten Ausführungsform.

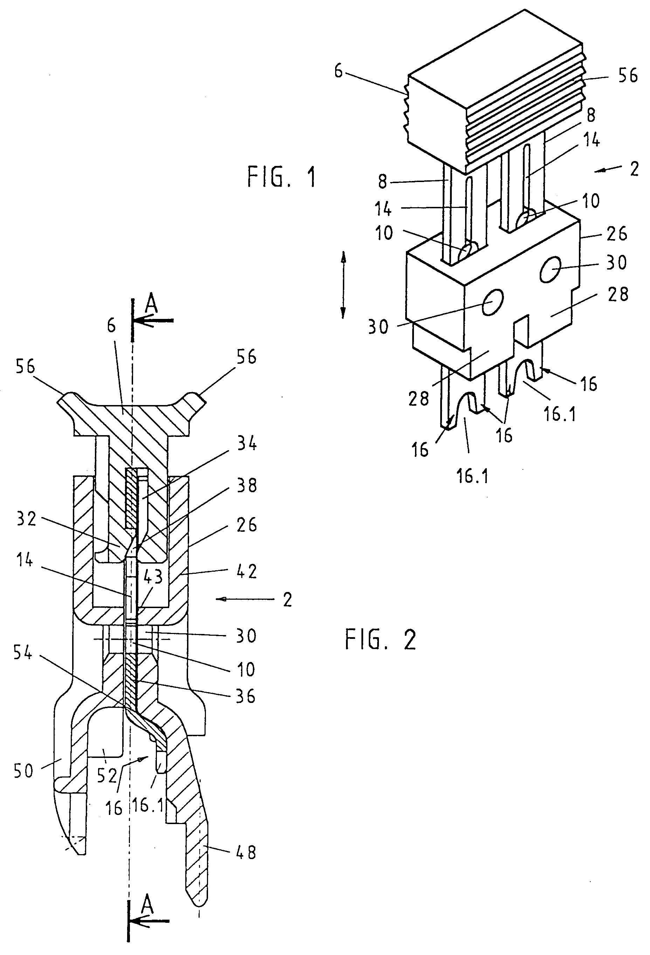

In der Fig. 1 ist eine erste einfache Ausführungsform eines erfindungsgemäßen Umschalteadapters 2 gezeigt. Der Umschalteadapter 2 besteht aus zwei länglichen Kontaktelementen 8, die mit ihrem jeweiligen oberen Ende in einem isolierten Kontaktträger 6 mechanisch fixiert sind. Die gleichartigen Kontaktelemente 8 sind zueinander parallel angeordnet. Die Kontaktelemente 8 sind in ihrem mittleren Bereich geschlitzt ausgebildet, so daß sie hier federnde Schneid-Klemm-Kontakte 14 zum Herstellen einer abisolierfreien Kontaktverbindung mit einer Umschalteader bilden. An den unteren Enden der Schneid-Klemm-Kontaktschlitze 14 ist eine Bohrung 10 zur Durchführung einer Umschalteader angebracht. Die jeweils freien unteren Enden der Kontaktelemente 8 besitzen einen Kontaktbereich 16 mit einem gabelförmigen Kontaktabschnitt 16.1 zum Herstellen eines Kontaktes mit einen Kontaktteil oder einer Ader einer beschalteten Anschlußleiste.

Der Umschalteadapter 2 umfaßt ferner ein isoliertes Führungsteil 26, das längs den Kontaktelementen 8 in dem die Schneid-Klemm-Kontaktschlitze 14 und die Öffnungen 10 enthaltenden mittleren Bereich beweglich ist. Diese Längsbeweglichkeit ist als Relativbewegung zwischen dem Führungsteil 26 und den Kontaktelemente 8 zu verstehen. Für die weitere Beschreibung wird diese Längsbeweglichkeit als Hubbewegung bezeichnet werden. Die Hubbeweglichkeit ist in der Fig. 1 durch einen Doppelpfeil angedeutet.

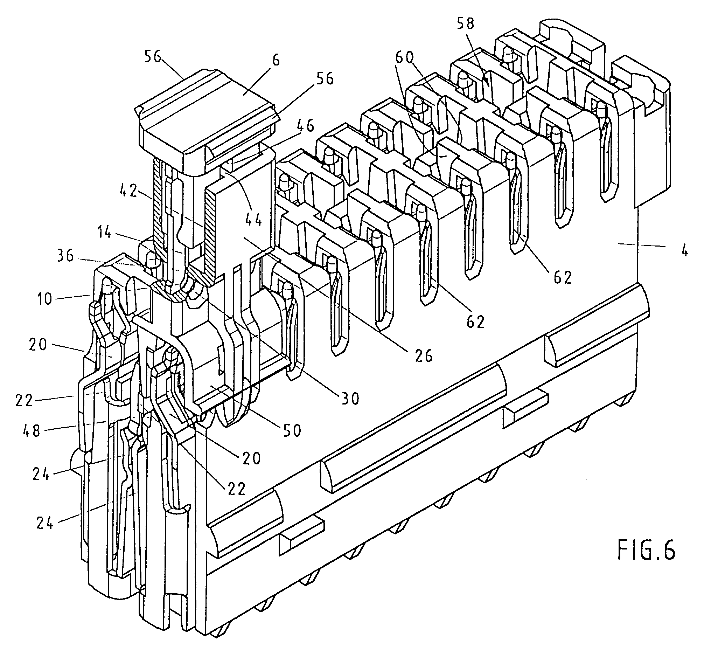

Das Führungsteil 26 weist senkrecht zur Hubrichtung Bohrungen 30 auf, durch die eine Umschalteader zu der Bohrung 10 eines Kontaktelementes 8 geführt werden kann. An der Unterseite des Führungsteils 26 sind Führungszapfen 28 ausgebildet, so daß der Umschalteadapter 2 geführt auf eine obenliegende Einstecköffnung 58 einer Telekommunikationsanschlußleiste 4 gesteckt werden kann (vgl. auch Fig. 6).

Weitere Details des erfindungsgemäßen Umschalteadapters 2 sowie das Verfahren zur Kontaktierung der Umschalteadern und deren elektrischer Anschluß an die Kontakte einer Anschlußleiste zur Durchführung eines unterbrechungsfreien Schaltbetriebes werden nachfolgend ausführlicher anhand einer zweiten Ausführungsform des Umschalteadapters beschrieben werden.

Der Fig. 2 ist eine zweite, komplexere Ausführungsform eines erfindungsgemäßen Umschalteadapters 2 zu entnehmen. Der Umschalteadapter 2 umfaßt wiederum zwei in einem isolierten Kontaktträger 6 fixierte, zueinander parallel angeordnete, elektrisch voneinander isolierte, gleichartige Kontaktelemente 36, die im nachfolgenden als Kontaktfedern 36 bezeichnet werden. Der Kontaktträger 6 besitzt an seiner Unterseite eine Einstecköffnung 34, in die das obere Ende einer jeweiligen Kontaktfeder 36 eingeführt werden kann. Seitlich der Einstecköffnung 34 ist ein hakenförmiger Abschnitt 32 im Kontaktträger 6 ausgebildet. Wird eine Kontaktfeder 36 in die Einstecköffnung 34 eingeführt, greift der hakenförmige Abschnitt 32 in eine im oberen Endbereich der Kontaktfeder 36 vorgesehene Aussparung 38, wodurch die Kontaktfeder 36 mechanisch im Kontaktträger 6 gehalten wird. Diese Verbindung kann so ausgelegt sein, daß sie wieder lösbar ist oder aber nach einmaligem Einrasten eine nicht wieder trennbare Verbindung zwischen Kontaktträger 6 und Kontaktfeder 36 herstellt.

Im mittleren Bereich der Kontaktfeder 36 ist ein Schneid-Klemm-Kontaktschlitz 14 ausgebildet, der als Vorrichtung zum Herstellen einer abisolierfreien Kontaktverbindung mit einer Umschalteader 12 dient. Am unteren Ende des Schneid-Klemm-Kontaktschlitzes 14 ist eine Bohrung 10 angebracht.

Die Kontaktfeder 36 mit dem Kontaktträger 6 ist hubbeweglich in dem isolierten Führungsteil 26 angeordnet. Das Oberteil des Führungsteils 26 ist als Gehäuse 42 mit einer obenliegenden Öffnung geformt. Das Unterteil des Führungsteils 26 gabelt sich in zwei Schenkel 48 und 50. Der Schenkel 50 besitzt eine zur Schnittachse A-A orientierte Rippe 52. Der Kontaktträger 6 reicht durch die obenliegende Öffnung des Gehäuses 42 in das Führungsteil 26 hinein und die Kontaktfeder 36 ist durch einen im Bodenbereich des Gehäuses 42 vorgesehenen Durchbruch 43 durch das Führungsteil 26 geführt. Wie in der Fig. 2 zu erkennen, ist das untere Ende der Kontaktfeder 36 abgekröpft, so daß die Kontaktfeder 36 mit dem Kontaktträger 6 zum einen unverlierbar an dem Führungsteil 26 angebracht und zum anderen in einem begrenzten Bereich parallel bzw. längs zur Kontaktfeder 36 hubbeweglich ist. Das Bezugszeichen 54 kennzeichnet einen sich aufgrund dieser Ausgestaltungsweise ergebenden Anschlag zwischen der Kontaktfeder 36 und dem Schenkel 48 des Führungsteils 26. In der in Fig. 2 dargestellten Position befinden sich Kontaktfeder 36 und Kontaktträger 6 in einer oberen Hubposition. Unter dem Gehäuse 42 des Führungsteils 26 ist eine durchgehende Öffnung 30 im Führungsteil 26 vorgesehen, die sich bei der o.g. Hubposition fluchtend mit der Bohrung 10 der Kontaktfeder 36 befindet.

Der in Fig. 2 gezeigte Montagezustand des Umschalteadapters 2 wird erreicht, indem erst die Kontaktfeder 36 von unten durch den Durchbruch 43 des Führungsteils 26 gesteckt und anschließend der Kontaktträger 6 aufgesetzt wird.

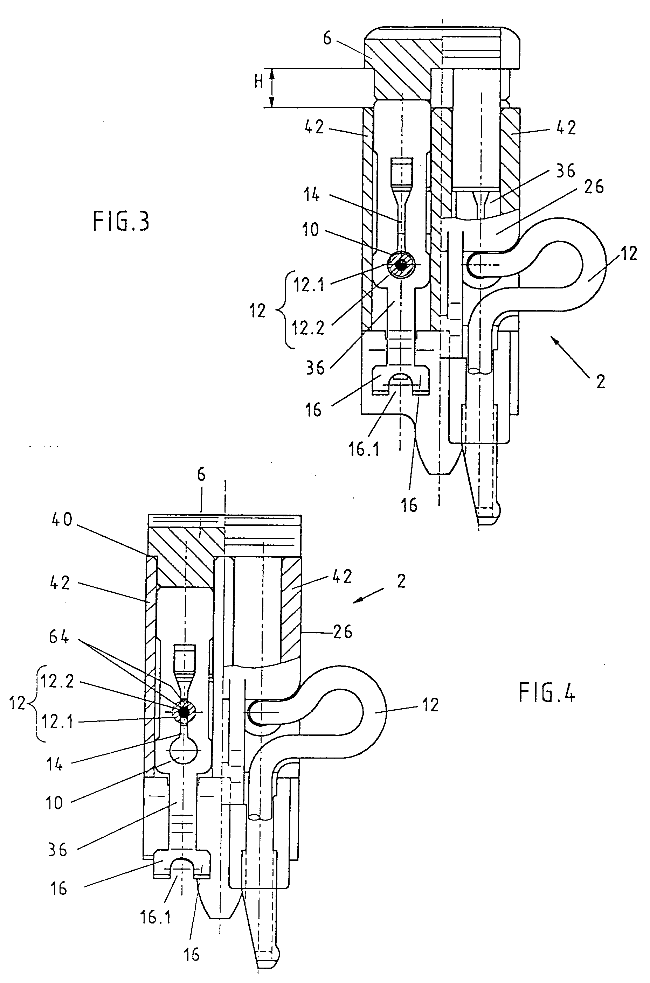

In der Fig. 3 sind weitere Einzelheiten des Umschalteadapters 2 in einem Zustand vor Herstellung einer abisolierfreien Kontaktverbindung mit der Umschalteader 12 zu ersehen. Der maximal erreichbare Hub der Kontaktfeder 36 mit ihrem Kontaktträger 6 im Führungsteil 26 ist mit dem Bezugszeichen H gekennzeichnet. Die Pfeile der Bezugslinie markieren gleichzeitig die Hubrichtung. In der Schnittdarstellung ist besonders gut der Schneid-Klemm-Kontaktschlitz 14 und die am unteren Ende des Schneid-Klemm-Kontaktschlitzes 14 angebrachte Bohrung 10 der Kontaktfeder 36 erkennbar. Die Fig. zeigt des weiteren die Umschalteader 12, mit ihrer Isolierung 12.1 und dem innenliegenden Leiter 12.2, die in der dargestellten oberen Hubposition durch die Öffnung 30 des Führungsteils 26 und durch die Bohrung 10 der Kontaktfeder 36 hindurchgesteckt ist. Zwischen Kontaktfeder 36 und Umschalteader 12 besteht keine elektrisch leitende Verbindung.

Am unteren abgekröpften Ende der Kontaktfeder 36 befindet sich der Kontaktbereich 16 zum Herstellen eines elektrischen Kontaktes mit einem Kontaktteil oder einer Ader einer Anschlußleiste. Im vorliegenden Fall verbreitert sich der Kontaktbereich 16 der Kontaktfeder 36 fußförmig. Der Kontaktbereich 16 enthält den gabelförmigen Kontaktabschnitt 16.1. Dieser kann alternativ mit einer Einrichtung zur Herstellung eines Schneid-Klemm-Kontaktes versehen sein. Diese Einrichtung ist in der Zeichnung nicht dargestellt. Neben der gabelförmigen Ausgestaltung des Kontaktabschnitt 16.1 können auch andere geeignete Formen in Frage kommen, wie z.B. eine dreieckige Einkerbung oder ähnliches.

Die Fig. 4 stellt eine Schnittansicht entlang der Linie A-A in der Fig. 2 dar, in einem Zustand nach Herstellung einer abisolierfreien Kontaktverbindung der Kontaktfeder 36 mit der Umschalteader 12. In diesem Zustand ist der Kontaktträger 6 mit der Kontaktfeder 36 in Hubrichtung nach unten gedrückt, so daß der mit einer Abstufung versehene Kontaktträger 6 auf der Oberseite des Gehäuses 42 des Führungsteiles 26 aufliegt. Die Hubbewegung ist durch den somit entstehenden Anschlag 40 nach unten begrenzt. Beim Übergang von dem in der Fig. 3 dargestellten, in den in Fig. 4 gezeigten Zustand einer unteren Hubposition wird der Schneid-Klemm-Kontaktschlitz 14 auf die Umschalteader 12 gedrückt. Die Umschalteader 12 liegt währenddessen auf den seitlich der Öffnung 10 befindlichen Rändern der Öffnung 30 des Führungsteils 26 auf, wodurch sich ein Widerlager ergibt. Die Schneiden des Schneid-Klemm-Kontaktschlitzes 14 durchtrennen folglich die Isolierung 12.1 der Umschalteader 12 und stellen eine abisolierfreie Kontaktverbindung mit der Litze 12.2 her. In der Fig. 4 kennzeichnet das Bezugszeichen 64 die Kontaktstelle zwischen dem Leiter 12.2 der Umschalteader 12 und der Kontaktfeder 36.

Wird der Kontaktträger 6 wieder an seinen an den oberen Seitenkanten ausgebildeten Griffelementen 56 zusammen mit der Kontaktfeder 36 in die obere Hubposition zurückgezogen, stellt sich erneut der in Fig. 3 dargestellte Zustand ein. Die obere Hubposition ist dabei durch den von dem abgekröpften unteren Ende der Kontaktfeder 36 und dem Schenkel 48 des Führungsteils gebildeten Anschlages 54 begrenzt (vgl. Fig. 2).

Wie den Fig. 2 bis 4 zu entnehmen, ist der erfindungsgemäße Umschalteadapter 2 gemäß der zweiten Ausführungsform im vorliegenden Fall für jeweils zwei Kontaktfedern 36 ausgelegt. Da beide Federn gleichartig ausgebildet sind, ist die vorhergehend nur auf eine einzelne Kontaktfeder 36 bezogene Beschreibung analog anzuwenden.

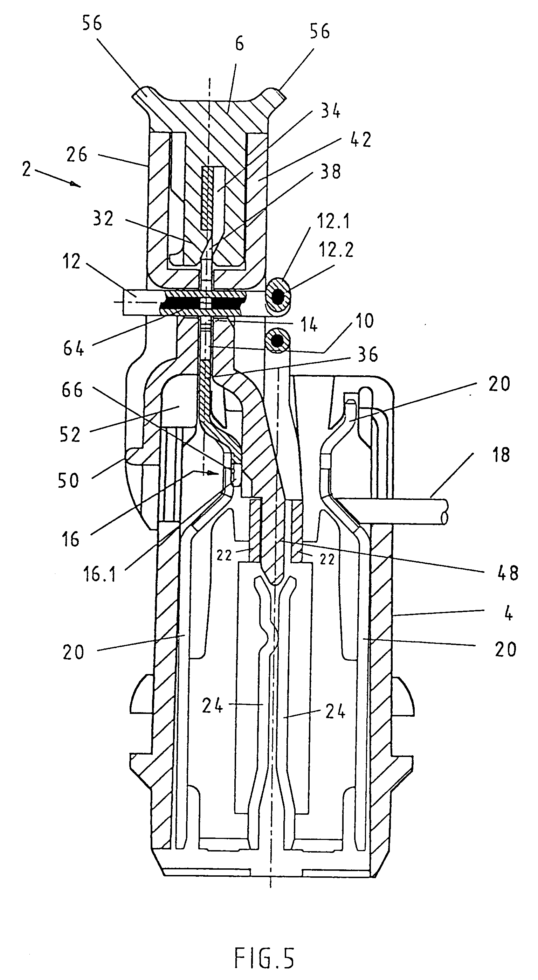

Fig. 5 zeigt in Schnittdarstellung den erfindungsgemäßen Umschalteadapter 2 gemäß der zweiten Ausführungsform, der auf eine Telekommunikations-Anschlußleiste 4 aufgesetzt ist. Als Befestigungseinrichtung zum Herstellen einer wieder lösbaren Klemm- bzw. Steckverbindung mit der Anschlußleiste 4 dienen die Schenkel 48 und 50 des Führungsteils 26. Die Rippe 52 des Schenkels 50 des Führungsteils 26 greift dabei in den oberen Bereich eines Klemmschlitzes 22 der Anschlußleiste 4 ein und dient somit der zusätzlichen Führung und Positionierung des Umschalteadapters 2 auf der Anschlußleiste 4 (vgl. auch Fig. 6).

Bei der ebenfalls im Querschnitt dargestellten Anschlußleiste 4 sind die symmetrisch zur Mittelachse angeordneten Schlaufenkontakte 20 erkennbar. Die Schlaufenkontakte 20 verfügen ebenfalls über Schneid-Klemm-Kontaktschlitze und sind jeweils links und rechts der Symmetrielinie der Anschlußleiste 4 mit einer Ader 18 belegt. Die linksseitige Ader ist in Fig. 5 der Übersichtlichkeit halber nicht dargestellt. Aus der Zeichnung ist jedoch ersichtlich, daß der Umschalteadapter 2 im vorliegenden Fall senkrecht zum Verlauf der Adern 18 in der Anschlußleiste 4 auf diese aufgesteckt ist.

Wie aus dem Vergleich mit der Fig. 4 deutlich wird, befindet sich in Fig. 5 das Führungsteil 26 des Umschalteadapters 2 mit seinem Kontaktträger 6 und den Kontaktfedern 36 in der unteren Hubposition. Dabei ist, wie vorhergehend beschrieben, eine abisolierfreie Kontaktverbindung 64 mit dem Leiter 12.2 der Umschalteader 12 hergestellt. In diesem Zustand berührt der Kontaktbereich 16 der Kontaktfeder 36 mit seinem gabelförmigen Kontaktabschnitt 16.1 den oberen Bereich des Schleifenkontaktes 20 der Anschlußleiste 4 und stellt einen elektrisch leitenden Kontakt 66 mit diesem Bauteil her. Würde der Kontaktträger 6 an seinen Griffelementen 56 zusammen mit den Kontaktfedern 36 erneut in die obere Hubposition gezogen, würden die Verbindungskontakte 64 und 66 wieder gelöst (vgl. Fig. 3). Durch weiteres Herausziehen des Umschalteadapters 2 kann auch dieser wieder vollständig von der Anschlußleiste 4 getrennt werden.

Bei dem in der Fig. 5 veranschaulichten Einsteckzustand des Umschalteadapters 2 in die Anschlußleiste 4 greift der Schenkel 48 des Führungsteiles 26 zwischen die Abschnitte 22 des Schlaufenkontaktes 20 der Anschlußleiste 4 und die abgerundete Kante des Schenkels 48 reicht geringfügig zwischen die Abschnitte 24 des Schlaufenkontaktes 20.

In der Fig. 6 ist der auf die Anschlußleiste 4 aufgesteckte erfindungsgemäße Umschalteadapter 2 gemäß der zweiten Ausführungsform noch einmal in perspektivischer Ansicht, teilweise in Schnittdarstellung, dargestellt. Die Anschlußleiste 4 zeigt eine übliche Bauart mit einer Vielzahl obenliegender Einstecköffnungen 58 und seitlichen Klemmschlitzen 62. Die Einstecköffnungen 58 besitzen eckige Aussparungen 60.

Wie der Fig. 6 noch zu entnehmen, besitzt das Gehäuse 42 des Führungsteils 26 des Umschalteadapters 2 einen Steg 44 und der Kontaktträger 6 eine Nut 46, so daß die Kontaktfedern 36 des Kontaktträgers 6 voneinander getrennt in zwei verschiedenen Kammern des Gehäuses 42 geführt werden.

Es wird nun das Verfahren zum Herstellen einer unterbrechungsfreien Umschaltverbindung beschrieben werden.

Als erstes werden zwei Umschaltadern 12 durch die Öffnungen 30 im Führungsteil 26 des Umschalteadapters 2 sowie durch die Bohrungen 10 am unteren Ende der Schneid-Klemm-Kontaktschlitze 14 der Kontaktfedern 36 geführt. Anschließend wird der mit den Umschalteadern 12 belegte Umschalteadapter 2 senkrecht auf die Anschlußleiste 4 aufgesetzt. Der Kontaktträger 6 mit seinen Kontaktfedern 36 befindet sich dabei in der oberen Hubposition (vgl. Fig. 3). Durch Druck auf den Kontaktträger 6 des Umschalteadapters 2 gleiten die Kontaktfedern 36 in die Kontaktkammern der Anschlußleiste 4 und stellen dort den elektrischen Kontakt 66 zu deren Schlaufenkontakt 20 her. Gleichzeitig gleitet das Führungsteil 26 durch Auflage auf die Oberseite der Anschlußleiste 4 am Umschalteadapter 2 in Richtung des Kontaktträgers 6 und drückt die Umschalteadern 12 kontaktierend in die Schneid-Klemm-Kontaktschlitze 14 der Kontaktfedern 36. Somit stehen auf der abgehenden Seite der Anschlußleiste 4 zwei parallel geschaltete Adern für das unterbrechungsfreie Umschalten einer Doppelader zur Verfügung.

Der erfindungsgemäße Umschalteadapter ist nicht auf die vorhergehend beschriebenen zwei Ausführungsformen beschränkt. Insbesondere können der Kontaktträger 6 und das Führungsteil 26 andere geeignete, als die vorhergehend beschriebenen Ausgestaltungsformen annehmen. Auch können die Öffnungen 10 und 30 anders als vorhergehend beschrieben geformt sein. So z.B. können diese Öffnungen auch eine quadratische, rechteckige oder ovale Gestalt und dergleichen besitzen. Je nach Anwendungsfall können die Kontaktfedern 36 auch weitere Abwinkelungen oder gebogene Abschnitte enthalten. Es ist außerdem denkbar, den Umschalteadapter 2 bei anderen Anschlußleistenausführungen z.B. seitlich oder in einer sonstigen Position an einer Anschlußleiste anzubringen.

### Bezugszeichenliste

Es bezeichnen:
- 2: Umschalteadapter
- 4: Anschlußleiste
- 6: Kontaktträger
- 8: Kontaktelement
- 10: Bohrung
- 12: Umschalteader
- 12.1: Isolierung
- 12.2: Leiter
- 14: Schneid-Klemm-Kontaktschlitz
- 16: Kontaktbereich
- 16.1: gabelförmiger Kontaktabschnitt
- 18: Ader
- 20: Schlaufenkontakt
- 22: Abschnitt des Schlaufenkontaktes 20
- 24: Abschnitt des Schlaufenkontaktes 20
- 26: Führungsteil
- 28: Führungszapfen
- 30: Öffnung
- 32: hakenförmiger Abschnitt
- 34: Einstecköffnung
- 36: Kontaktfeder
- 38: Aussparung
- 40: Anschlag
- 42: Gehäuse
- 43: Durchbruch
- 44: Steg
- 46: Nut
- 48: Schenkel
- 50: Schenkel
- 52: Rippe
- 54: Anschlag
- 56: Griffelement
- 58: Einstecköffnungen
- 60: eckige Aussparungen
- 62: Klemmschlitz
- 64: Kontaktstelle
- 66: Kontaktstelle
- H: Hub

## Patentansprüche

1. Umschalteadapter (2) für eine Telekommunikationsanschlußleiste (4), umfassend
- wenigstens zwei in einem isolierten Kontaktträger (6) fixierte, zueinander im wesentlichen parallel angeordnete, gleichartige Kontaktelemente (8, 36) mit
a) mindestens einer im mittleren Bereich eines jeweiligen Kontaktelementes (8, 36) befindlichen Öffnung (10) zur Durchführung mindestens einer Umschalteader (12) sowie
b) einer in diesem mittleren Bereich angeordneten Vorrichtung (14) zum Herstellen einer abisolierfreien Kontaktverbindung (64) mit der Umschalteader (12) und
c) einer an den freien Enden eines jeweiligen Kontaktelementes (8, 36) vorgesehenen Einrichtung (16) zum Herstellen eines Kontaktes (66) mit wenigstens einem Kontaktteil (20) oder einer Ader (18) der Anschlußleiste (4), und
- ein längs den Kontaktelementen (8, 36) bewegliches, isoliertes Führungsteil (26) mit
d) im wesentlichen senkrecht zur Bewegungsrichtung verlaufenden Öffnungen (30) zum Einführen mindestens einer Umschalteader (12) zu einem Kontaktelement (8, 36) und
e) einer Einrichtung (48, 50, 52) zum Positionieren des Umschalteadapters (2) an der Anschlußleiste (4).

2. Umschalteadapter nach Anspruch 1,
dadurch gekennzeichnet, daß
die Vorrichtung (14) zum Herstellen einer abisolierfreien Kontaktverbindung (64) mit der Umschalteader (12) ein Schneid-Klemm-Kontaktschlitz (14) ist.

3. Umschalteadapter nach Anspruch 1 und 2,
dadurch gekennzeichnet, daß
die Öffnung (10) zur Durchführung mindestens einer Umschalteader (12) eine endseitige Bohrung (10) an dem Schneid-Klemm-Kontaktschlitz (14) ist.

4. Umschalteadapter nach einem oder mehreren der vorgenannten Ansprüche,
dadurch gekennzeichnet, daß
der Kontaktträger (6) über eine Einrichtung (32) zum Herstellen einer mechanischen Verbindung mit den Kontaktelementen (8, 36) verfügt.

5. Umschalteadapter nach einem oder mehreren der vorgenannten Ansprüche,
dadurch gekennzeichnet, daß
die Kontaktelemente (8, 36) als Kontaktfedern (36) ausgebildet sind.

6. Umschalteadapter nach einem oder mehreren der vorgenannten Ansprüche,
dadurch gekennzeichnet, daß
die Fixierung eines jeweiligen Kontaktelementes (8, 36) in den Kontaktträger (6) über eine Klemm-, Rast-(32, 38) , Steck- oder Schnappverbindung oder dergleichen erfolgt.

7. Umschalteadapter nach einem oder mehreren der vorgenannten Ansprüche,
dadurch gekennzeichnet, daß
das Führungsteil (26) an den Kontaktelementen (8, 36) unverlierbar angebracht ist.

8. Umschalteadapter nach einem oder mehreren der vorgenannten Ansprüche,
dadurch gekennzeichnet, daß
das Führungsteil (26) und/oder der Kontaktträger (6) und/oder ein Kontaktelement (8, 36) mit einem Anschlag (40, 54) zur Begrenzung der Bewegung des Führungsteiles (26) längs den Kontaktelementen (8, 36) versehen ist.

9. Umschalteadapter nach einem oder mehreren der vorgenannten Ansprüche,
dadurch gekennzeichnet, daß
die Kontaktelemente (8, 36) an ihren freien Enden abgekröpft sind.

10. Umschalteadapter nach einem oder mehreren der vorgenannten Ansprüche,
dadurch gekennzeichnet, daß
die Einrichtung (16) zum Herstellen eines Kontaktes (66)mit wenigstens einem Kontaktteil (20) oder einer Ader (18) der Anschlußleiste (4) an den jeweils freien Enden der Kontaktelemente (8, 36) in Form eines gabelförmigen Kontaktabschnittes (16.1) oder dergleichen ausgebildet ist.

11. Umschalteadapter nach Anspruch 10,
dadurch gekennzeichnet, daß
der Kontaktabschnitt (16.1) mit einer Einrichtung zur Herstellung eines Schneid-Klemm-Kontaktes versehen ist.

12. Umschalteadapter nach einem oder mehreren der vorgenannten Ansprüche,
dadurch gekennzeichnet, daß
das Führungsteil (26) als Gehäuse (42) ausgebildet ist, in das der Kontaktträger (6) teilweise oder vollständig einführbar ist.

13. Umschalteadapter nach einem oder mehreren der vorgenannten Ansprüche,
dadurch gekennzeichnet, daß
das Gehäuse (42) des Führungsteiles (26) und/oder der Kontaktträger (6) weitere Führungs- (48, 50, 52) und/oder Trennelemente (46) besitzen.

14. Umschalteadapter nach einem oder mehreren der vorgenannten Ansprüche,
dadurch gekennzeichnet, daß
dieser eine Befestigungseinrichtung (48, 50, 52) zum Herstellen einer wieder lösbaren Verbindung mit der Anschlußleiste (4) besitzt.

15. Umschalteadapter nach Anspruch 14,
dadurch gekennzeichnet, daß
die Befestigungseinrichtung (48, 50, 52) eine Klemm-, Rast-, Steck- oder Schnappverbindung oder dergleichen ist.

16. Umschalteadapter nach einem oder mehreren der vorgenannten Ansprüche,
dadurch gekennzeichnet, daß
dieser mit Griffelementen (56) versehen ist.

17. Umschalteadapter nach einem oder mehreren der vorgenannten Ansprüche,
dadurch gekennzeichnet, daß
dieser senkrecht zum Aderverlauf (18) in der Anschlußleiste (4) auf diese aufsteckbar ist.
